# EUROPÄISCHE PATENTANMELDUNG

(11) **EP 3 702 907 A1**
(43) Veröffentlichungstag der Anmeldung: **02.09.2020**
(21) Anmeldenummer: 19159745.9
(22) Anmeldetag: 27.02.2019
(51) Int. Cl.: G06F 8/34, G06F 8/38, G06T 19/00, G06F 9/451, G06F 3/01, G06F 9/445

(54) **VERFAHREN ZUM BEREITSTELLEN VON AUGMENTED-REALITY DATEN, RECHENEINRICHTUNG, SYSTEM UND COMPUTERPROGRAMM**

(71) Anmelder: Scheid, Ralf, 90513 Zirndorf (DE)
(72) Erfinder: Scheid, Ralf, 90513 Zirndorf (DE)
(74) Vertreter: Dr. Gassner & Partner mbB

(57) **Zusammenfassung**

Verfahren zum Bereitstellen von AR-Daten, wobei die AR-Daten Verhaltensdaten, die ein Verhalten eines auf einem Client (5) darzustellenden AR-Objekts beschreiben, umfassen, wobei das Verfahren folgende durch ein Content-Management-System durchgeführte Schritte aufweist:
- Bereitstellen einer grafischen Benutzeroberfläche für einen Inhalte-Produzenten, die Verhaltensobjekte (15-28) zur Auswahl durch den Inhalte-Produzenten bereitstellt, wobei ein Verhaltensobjekt (16-19) eine Aktion des AR-Objekts beschreibt und einen Eingang aufweist und ein Verhaltensobjekt (15) ein clientseitiges Triggerereignis im Zusammenhang mit der Aktion beschreibt und einen Ausgang aufweist,
- Entgegennehmen von Bedieneingaben des Inhalte-Produzenten, welche die Auswahl von Verhaltensobjekten (15-28) und eine einen Programmfluss beschreibende Verknüpfung von Verhaltensobjekten (15-28) durch ein Verbindungsobjekt umfassen,
- Darstellen der Verhaltensobjekte (15-28) und der Verbindungsobjekte als Diagramm (14) auf der grafischen Benutzeroberfläche,
- Umsetzen des Diagramms (14) in einen die Verhaltensdaten bildenden Datensatz, durch welchen ein Programmcode auf dem Client (5) zur Durchführung des Verhaltens parametrierbar ist, und
- Bereitstellen der AR-Daten für den Client (5).

## Beschreibung

Die vorliegende Erfindung betrifft ein Verfahren zum Bereitstellen von AR-Daten. Daneben betrifft die Erfindung eine Recheneinrichtung, ein System und ein Computerprogramm.

Die Anwendung von Augmented Reality (AR) erfasst immer weitere Bereiche des täglichen Lebens und betrifft längst nicht mehr reine Unterhaltungsanwendungen. Um AR-Daten möglichst flexibel zu verwalten und bereitzustellen wurden bereits Server-Client-Systeme vorgeschlagen, die eine Verwaltung durch einen Inhalte-Produzenten ermöglichen:
Das Dokument US 2014/0340423 A1 offenbart beispielsweise eine netzwerkgestützte Plattform zum Bereitstellen und Verwalten von Markern zur Verwendung in einer AR-basierten Technologie. Dabei wird von einem Server eine administrative Schnittstelle bereitgestellt, über die autorisierte Stellen Assets bereitstellen können. Ein Asset ist ein 3D-Objekt, das heruntergeladen und dargestellt wird. Solche Assets sind interaktiv und reagieren auf Berührungen von Nutzern.

Das Bereitstellen und Verwalten der AR-Daten, die auf dem Client darzustellen sind, ist herkömmlicherweise sehr aufwendig und verlangt einem Inhalte-Produzenten mitunter vertiefte Programmierkenntnisse ab. Insbesondere sind Verhaltensdaten, die ein Verhalten eines AR-Objekts auf dem Client beschreiben, aufwändig in einer Programmiersprache in Textform einzugeben.

Der Erfindung liegt die Aufgabe zugrunde, eine benutzerfreundlichere Möglichkeit zum Bereitstellen von AR-Daten anzugeben.

Zur Lösung dieser Aufgabe wird erfindungsgemäß ein Verfahren zum Bereitstellen von AR-Daten vorgeschlagen, wobei die AR-Daten Verhaltensdaten, die ein Verhalten eines auf einem Client darzustellenden AR-Objekts beschreiben, umfassen, wobei das Verfahren folgende durch ein Content-Management-System durchgeführte Schritte aufweist:
- Bereitstellen einer grafischen Benutzeroberfläche für einen Inhalte-Produzenten, die Verhaltensobjekte zur Auswahl durch den Inhalte-Produzenten bereitstellt, wobei ein Verhaltensobjekt eine Aktion des AR-Objekts beschreibt und einen Eingang aufweist und ein Verhaltensobjekt ein clientseitiges Triggerereignis beschreibt und einen Ausgang aufweist,
- Entgegennehmen von Bedieneingaben des Inhalte-Produzenten, welche die Auswahl von Verhaltensobjekten und eine einen Programmfluss beschreibende Verknüpfung von Verhaltensobjekten durch ein Verbindungsobjekt umfassen,
- Darstellen der Verhaltensobjekte und der Verbindungsobjekte als Diagramm auf der grafischen Benutzeroberfläche,
- Umsetzen des Diagramms in einen die Verhaltensdaten bildenden Datensatz, durch welchen ein Programmcode auf dem Client zur Durchführung des Verhaltens parametrierbar ist, und
- Bereitstellen der AR-Daten für den Client.

Die Erfindung beruht auf der Überlegung, die Verwaltung der AR-Daten durch die grafische Benutzeroberfläche zu realisieren, auf welcher der Inhalte-Produzent durch Bedieneingaben einerseits Verhaltensobjekte auswählen und andererseits diese durch Verbindungsobjekte zu einem Programmfluss verknüpfen kann. Ein so gewonnenes Diagramm wird dann in den Datensatz zum Parametrieren des clientseitigen Programmcodes umgewandelt. Dabei wird das Verhalten des AR-Objekts zumindest durch das Triggerereignis und die Aktion beschrieben, die der Inhalte-Produzent miteinander verknüpfen kann.

Der Inhalte-Produzent benötigt dementsprechend keine vertieften Programmierkenntnisse, insbesondere keine Kenntnisse einer Programmiersprache, da das Content-Management-System das Diagramm in den Datensatz, der einen bestehenden Programmcode auf dem Client parametriert, umsetzt und dem Client als Teil der AR-Daten bereitstellt. So wird zusätzlich vermieden, dass ein echter Programmcode auf den Client geladen wird, was zur Vermeidung einer möglichen Übertragung von Schadcode unerwünscht oder gar unzulässig ist. Insgesamt realisiert die Erfindung so den Vorteil, dass das Bereitstellen der AR-Daten wesentlich benutzerfreundlicher möglich ist.

Typischerweise umfassen die AR-Daten auch Markerdaten, die mit dem AR-Objekt verknüpft sind und einen Marker beschreiben, bei dessen Erfassung durch den Client das AR-Objekt auf dem Client zur Anzeige bereitgestellt wird.

Mögliche Aktionen sind eine Transformation des oder eines AR-Objekts, insbesondere eine Veränderung oder ein Setzen eines Orts und/oder einer Größe und/oder eines Rotationswinkels und/oder eine Ausrichtung zu einem Koordinatenpunkt und/oder eine Verschiebung, und/oder ein Ausführen einer Animation des AR-Objekts und/oder eine Veränderung einer Farbe und/oder einer Textur des AR-Objekts und/oder eines Texturversatzes des AR-Objekts und/oder einer Texturkachelung und/oder eines Materials des AR-Objekts und/oder eine Aktivierung des AR-Objekts und/oder eine Deaktivierung des AR-Objekts und/oder ein Anzeigen des AR-Objekts und/oder ein Verstecken des AR-Objekts und/oder ein Clonen des AR-Objekts und/oder ein Zurücksetzen des Verhaltens des AR-Objekts und/oder ein Laden eines Assetpacks und/oder ein Entfernen eines Assetpacks. Ein Assetpack ist ein 3D-Objekt, das einen Teil des AR-Objekts bildet. Dabei weist ein AR-Objekt typischerweise in Root-Assetpack auf, welches zuerst geladen wird, wenn das AR-Objekt geladen wird, wobei das Root-Assetpack weitere Assetpacks des AR-Objekts nachladen oder wieder entfernen kann.

Daneben können auch objektunabhängige Aktionen beschreibende Verhaltensobjekte vorgesehen sein. So können objektunabhängige Aktionen ein Überprüfen eines Wahrheitswertes und/oder ein Abspielen und/oder ein Bestimmen einer Dauer des Abspielens und/oder ein Pausieren und/oder ein Anhalten einer Mediendatei, insbesondere einer Audiodatei oder einer Videodatei, und/oder ein Auslösen eines Audioanrufs auf dem Client und/oder ein Auslösen eines Videoanrufs auf dem Client und/oder ein Öffnen einer URL in einem Webbrowser des Clients und/oder ein Absenden einer E-Mail und/oder eine Warteaktion und/oder ein Anzeigen eines Dialogs auf dem Client und/oder ein Darstellen eines Textes auf dem Client, insbesondere zum Debugging, und/oder ein Vorgeben einer Reihenfolge zweier eingangsseitiger Aktionen sein.

Typischerweise ist das Triggerereignis eine Bedienaktion eines Nutzers des Clients. Mögliche eine Bedienaktion des Nutzers beschreibende Triggerereignisse können ein Betätigen eines Dialogbuttons auf dem Client und/oder ein für eine vorgegebene Zeit andauerndes Berühren und/oder eine Wischgeste und/oder ein Antippen und/oder ein Beginn einer Berührung und/oder ein Ende einer Berührung und/oder eine Bewegung einer Berührung des AR-Objekts sein. Alternativ oder zusätzlich kann ein Triggerereignis das Laden des AR-Objekts durch den Client und/oder ein Erfassen eines Markers oder einer Markergruppe und/oder ein Verlieren eines Markers oder einer Markergruppe und/oder ein Bewegen eines Markers oder eines Mitglieds einer Markergruppe und/oder eine Veränderung einer Eigenschaft und/oder ein Start einer Applikation auf dem Client und/oder ein Entladen des AR-Objekts sein.

Daneben kann bei dem erfindungsgemäßen Verfahren vorgesehen sein, dass die Bedieneingaben eine einen Datenfluss beschreibende Verknüpfung zwischen einem Ausgang eines der Verhaltensobjekte und einem Eingang eines anderen der Verhaltensobjekte beschreibt, wobei die Verhaltensobjekte derart verknüpft werden, dass ein am Ausgang bereitgestellter Ausgangswert des Verhaltensobjekts dem Eingang des anderen Verhaltensobjekts als Eingangsparameter zugeführt wird. Dadurch wird es dem Inhalte-Produzenten ermöglicht, parallel zum Programmfluss auch einen Datenfluss ohne vertiefte Programmierkenntnisse grafisch durch das Diagramm zu modellieren.

Der Programmfluss und der Datenfluss sind zweckmäßigerweise miteinander verknüpft. Es ist möglich, dass ein eine Aktion beschreibendes Verhaltensobjekt einen Eingang für ein Ausgangswert eines anderen Verhaltensobjekts aufweist, um die Aktion vom Datenfluss abhängig zu machen. Es ist auch möglich, dass ein eine Aktion beschreibendes Verhaltensobjekt einen Ausgang für einen Ausgangswert aufweist, mit dem ein Datenfluss beginnt.

Beispielsweise beschreibt ein Verhaltensobjekt eine Funktion, welche einen oder mehrere Eingangsparameter des Verhaltensobjekts verarbeitet und als Ausgangswert bereitstellt. Mögliche Funktionen sind eine logische Funktion und/oder eine arithmetische Funktion und/oder ein Textmanipulator und/oder eine Typkonvertierung und/oder ein Vergleichsfunktion und/oder eine Zugriffsmethode, welche eine Eigenschaft eines Verhaltensobjekts abfragt und einen die Eigenschaft beschreibenden Ausgangswert bereitstellt und/oder einen Zufallswert bereitstellt.

Ein Verhaltensobjekt kann eine Variable beschreiben, wobei ein durch eine Bedieneingabe des Inhalte-Produzenten vorgegebener Wert als Ausgangswert des Verhaltensobjekts gespeichert wird. Es können folgende Typen von Variablen zur Auswahl durch den Inhalte-Produzenten vorgesehen sein: eine Animation und/oder Töne und/oder ein Wahrheitswert und/oder eine Farbe und/oder ein AR-Objekt und/oder ein Material und/oder ein Zahlenwert und/oder ein Textstring und/oder eine Textur und/oder Vektoren, insbesondere Vektoren mit zwei, drei oder vier Einträgen, und/oder ein Video.

Eine Aktion kann auch eine Änderungsmethode sein, welche eine Variable eines bestimmten Typs setzt.

Außerdem kann ein Verhaltensobjekt einen Systemwert des Clients zu dessen Laufzeit als Ausgabewert beschreiben und als Ausgangswert des Verhaltensobjekts bereitgestellt werden. Dabei können folgende Systemwerte zur Auswahl bereitgestellt werden: Informationen über eine auf dem Client ausgeführte Applikation und/oder eine Ausrichtung des Clients in einer Himmelsrichtung und/oder ein aktuelles Datum und/oder eine Dauer, seit welcher die Applikation auf dem Client ausgeführt wird, und/oder eine Information über eine Anzeigeeinrichtung des Clients und/oder eine geographische Position des Clients und/oder ein Betriebssystem bzw. eine Plattform des Clients.

Es wird bei dem erfindungsgemäßen Verfahren besonders bevorzugt, wenn eine Bedieneingabe des Inhalte-Produzenten entgegengenommen wird, welche das Definieren mehrerer Verhaltensobjekte und diese verknüpfende Verbindungsobjekte in einem zweiten Diagramm zu einem Modulverhaltensobjekt beschreibt, wobei das Modulverhaltensobjekt als ein Verhaltensobjekt im ersten Diagramm verwendet wird. So ist es für den Inhalte-Produzenten möglich, mehrere Verhaltensobjekte zu einem Modul zusammenzufassen und diese einfach oder mehrfach in das Diagramm einzuführen. Dies verbessert die Ergonomie und Benutzerfreundlichkeit des Verfahrens noch weiter, da das Modulverhaltensobjekt die Übersichtlichkeit des Diagramms erhöht und zugleich ein intuitives Abbilden komplexerer Programmierstrukturen mit Routinen etc. ermöglicht. Selbstverständlich kann ein Modulverhaltensobjekt in einem weiteren Modulverhaltensobjekt verwendet und verknüpft werden.

Sämtliche vorgenannten möglichen Verhaltensobjekte, einschließlich der Modulverhaltensobjekte, können zur Auswahl durch den Inhalte-Produzenten bereitgestellt werden.

Um eine besonders intuitive Bedienung für den Inhalte-Produzenten zu ermöglichen wird es bevorzugt, wenn das Diagramm als Knotendiagramm abgebildet wird und/oder die Verhaltensobjekte kastenartig abgebildet werden und/oder das Verbindungsobjekt oder die Verbindungsobjekte linienartig abgebildet werden.

Darüber hinaus können die AR-Daten Zusatzdaten, insbesondere Bildinformationen und/oder Videoinformationen und/oder Audioinformationen und/oder Textinformationen, für das AR-Objekt umfassen, wobei die Aktion das Darstellen der Zusatzdaten auf dem Client beschreibt und/oder die Zusatzdaten durch das Content-Management-System entgegengenommen und mit den Verhaltensdaten verknüpft werden. So können die Zusatzdaten für einen Nutzer des Clients bereitgestellt werden, um beispielsweise zusätzliche Informationen, die nicht durch das AR-Objekt selbst darstellbar sind, bereitzustellen.

Typischerweise umfassen die AR-Daten bei dem erfindungsgemäßen Verfahren ferner Grafikdaten, die das AR-Objekt beschreiben, wobei die Grafikdaten in Abhängigkeit einer Bedieneingabe des Inhalte-Produzenten durch das Content-Management-System entgegengenommen und mit den Verhaltensdaten verknüpft werden. Das Content-Management-System ermöglicht es somit nicht nur auf benutzerfreundlicher Art und Weise die Verhaltensdaten zu verwalten, sondern auch die das AR-Objekt beschreibenden Grafikdaten durch ein einheitliches Content-Management-System bereitzustellen und zu verwalten.

Im Rahmen einer besonders bevorzugten Anwendung des Verfahrens ist vorgesehen, dass die Grafikdaten eine Visualisierung eines Bauelements einer Industriemaschine als AR-Objekt beschreiben, wobei die AR-Daten Markerdaten umfassen, welche das Bauelement als Marker definieren, bei dessen Erfassung durch den Client das AR-Objekt dargestellt wird. So ist es beispielsweise möglich, die AR-Daten mittels des Content-Management-Systems derart zu gestalten, dass ein Nutzer des Clients sich in einen Wartungsbereich der Industriemaschine begibt, dort das als Marker definierte Bauelement mittels des Clients erfasst und die dreidimensionale Visualisierung des Bauelements dargestellt wird. Durch eine entsprechende Definition der Verhaltensdaten kann der Benutzer dann, insbesondere für eine Wartung oder Reparatur des Bauelements nützliche, Informationen erhalten. Dazu können beispielsweise als Zusatzdaten eine Dokumentation oder eine Wartungs- bzw. Reparaturanleitung des Bauelements hinterlegt sein.

Zweckmäßigerweise ist der Client ein tragbares Datenkommunikationsgerät, insbesondere ein Smartphone oder ein Tablett.

Hinsichtlich der Implementierung des erfindungsgemäßen Verfahrens wird es bevorzugt, wenn das Content-Management-System durch einen Server für einen zweiten Client, an dem der Inhalte-Produzent die Bedieneingaben tätigen kann, bereitgestellt wird oder auf einem zweiten Client ausgeführt wird und die AR-Daten an einen Server übertragen werden. Bei beiden Alternativen können die AR-Daten durch den Server zum Abrufen durch den ersten Client bereitgestellt werden.

Die der Erfindung zu Grunde liegende Aufgabe wird ferner durch eine Recheneinrichtung gelöst, umfassend Mittel zur Ausführung der Schritte des erfindungsgemäßen Verfahrens.

Die der Erfindung zu Grunde liegende Aufgabe wird ferner durch ein System, umfassend die erfindungsgemäße Recheneinrichtung und den Client, welche über das Internet miteinander zur Datenkommunikation verbunden oder verbindbar sind. Daneben kann das System den zweiten Client aufweisen.

Daneben wird die der Erfindung zu Grunde liegende Aufgabe durch ein Computerprogramm gelöst, umfassend Befehle, die bei der Ausführung des Programms durch einen Computer diesen veranlassen, die Schritte des erfindungsgemäßen Verfahrens auszuführen.

Sämtliche Ausführungen zum erfindungsgemäßen Verfahren lassen sich analog auf die erfindungsgemäße Recheneinrichtung, das erfindungsgemäße System und das erfindungsgemäße Computerprogramm übertragen, sodass auch mit diesen die zuvor genannten Vorteile erzielt werden können.

Weitere Vorteile und Einzelheiten der vorliegenden Erfindung ergeben sich aus den im folgenden beschriebenen Ausführungsbeispielen und anhand der Zeichnungen. Diese sind schematische Darstellungen und zeigen:
- Fig. 1: ein Blockdiagramm eines Ausführungsbeispiels des erfindungsgemäßen Systems mit Ausführungsbeispielen der erfindungsgemäßen Recheneinrichtung und eines erfindungsgemäßen Computerprogramms; und
- Fig. 2: eine exemplarische Darstellung eines Diagramms zur Erläuterung eines Ausführungsbeispiels des erfindungsgemäßen Verfahrens.

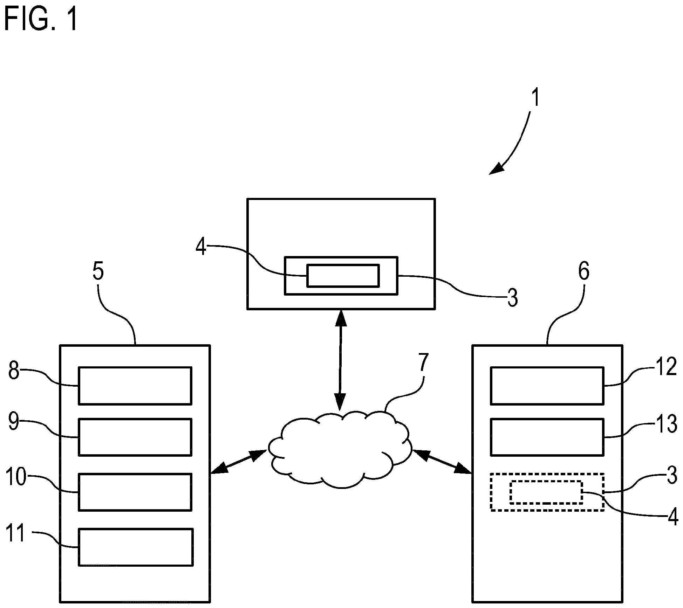

Fig. 1 ist ein Blockdiagramm eines Ausführungsbeispiels eines Systems 1, umfassend einen Servers 2 mit einem Ausführungsbeispiel einer Recheneinrichtung 3, auf welcher ein Ausführungsbeispiel eines Computerprogramms 4 ausführbar ist. Daneben umfasst das System 1 einen ersten Client 5 und einem zweiten Client 6. Der Server 2 und die Clients 5, 6 kommunizieren über das Internet 7 miteinander.

Der Server 2 stellt einen Webservice bereitstellt, über den einerseits AR-Daten zum Abruf durch den ersten Client 5 und andererseits ein Content-Management-System für den zweiten Client 6 bereitgestellt werden. Mittels des Content-Management-Systems können die für den ersten Client 5 bereitgestellten AR-Daten durch einen Inhalte-Produzenten verwaltet werden. Gemäß eines alternativen Ausführungsbeispiels wird das Computerprogramm 4 auf einer Recheneinrichtung 3 (in Fig. 1 gestrichelt dargestellt) des zweiten Clients 6 ausgeführt und stellt dort das Content-Management-System bereit, damit der Inhalt-Produzent die AR-Daten über das Internet 7 an den Server 2 übertragen kann.

Der erste Client 5 ist ein tragbares Datenkommunikationsgerät, beispielsweise ein Smartphone oder ein Tablet-PC, und umfasst eine Anzeigeeinrichtung 8, eine Eingabeeinrichtung 9, eine Bilderfassungseinrichtung 10 und eine Sensoreinrichtung 11. Die Anzeigeeinrichtung 8 und die Eingabeeinrichtung 9 sind als Touchscreen ausgebildet.

Auf dem ersten Client 5 ist eine Applikation installiert, die es ermöglicht, die AR-Daten zur Darstellung von AR-Objekten auf der Anzeigeeinrichtung 8 vom Server 2 abzurufen und Bedieneingaben eines Nutzers des ersten Clients 5 auf der Eingabeeinrichtung 9 entgegenzunehmen. Dabei umfassen die AR-Daten Grafikdaten, die ein AR-Objekt beschreiben, sowie Markerdaten, die mit dem AR-Objekt verknüpft sind und einen Marker beschreiben, bei dessen Erfassung durch die Bilderfassungseinrichtung 10 das AR-Objekt applikationsintern zur Anzeige bereitgestellt wird. Daneben umfassen die AR-Daten Verhaltensdaten, die ein Verhalten AR-Objekts beschreiben. Schließlich umfassen die AR-Daten Zusatzdaten in Form von Bildinformationen und/oder Videoinformationen und/oder Audioinformationen und/oder Textinformationen, die durch den ersten Client 5 ausgegeben werden können.

Will der Inhalte-Produzent mithin neue oder aktualisierte AR-Daten für den ersten Client 5 bereitstellen, muss der Nutzer des ersten Clients 5 nicht die gesamte Applikation herunterladen oder aktualisieren, da die jeweils aktuellen AR-Daten bei Bedarf, beispielsweise bei einem Neustart der Applikation oder bei der Erfassung eines bereits auf dem ersten Client 5 vorhandenen Markers, vom Server 2 heruntergeladen werden.

Der zweite Client 6 umfasst eine Anzeigeeinrichtung 12, auf welcher das Content-Management-System visualisiert wird, und eine Eingabeeinrichtung 13, mittels welcher der Inhalte-Produzent Bedieneingaben an das Content-Management-System tätigen kann. Das Content-Management-System stellt dem Inhalte-Produzenten dazu eine grafische Benutzeroberfläche bereit.

Die Recheneinrichtung 3 umfasst Mittel zur Ausführung der Schritte eines Ausführungsbeispiels eines Verfahrens zum Bereitstellen von AR-Daten. Desgleichen umfasst das Computerprogramm 4 Befehle, die bei der Ausführung des Computerprogramms 4 durch die Recheneinrichtung 3 diese veranlassen, die Schritte des Verfahrens auszuführen. Das Ausführungsbeispiel des Verfahrens wird im Folgenden erläutert:
Im Rahmen des Verfahrens wird dem Inhalte-Produzenten zunächst ein Dialog bereitgestellt, mit dem er ein AR-Objekt definieren und die Grafikdaten, die Markerdaten und die Zusatzdaten dem AR-Objekt zuordnen kann. Dazu werden die zuvor genannten Daten vom zweiten Client 6 auf den Server 2 hochgeladen.

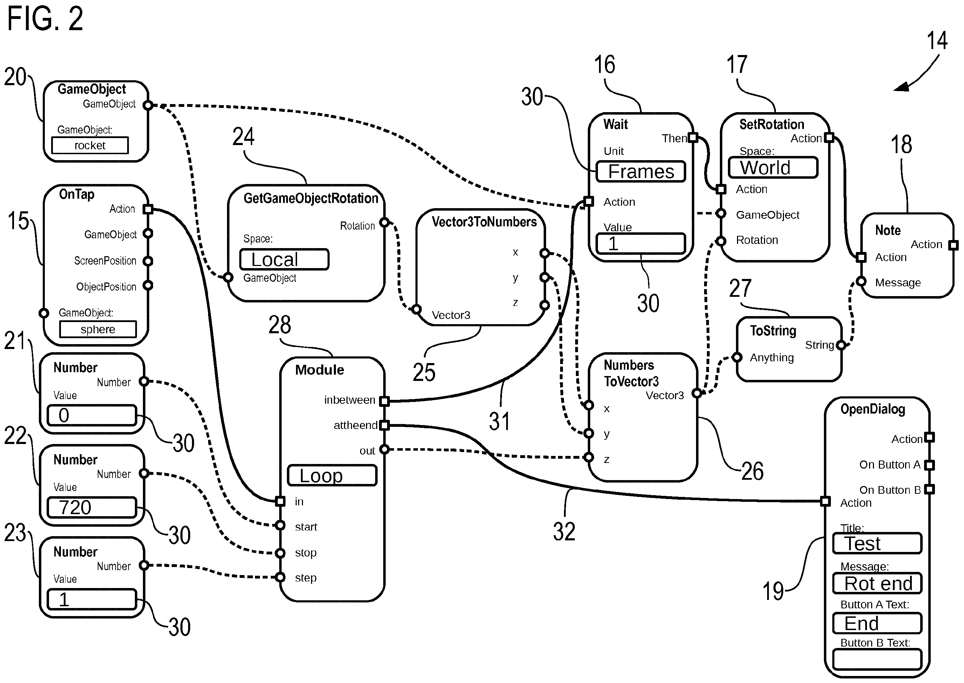

Fig. 2 eine exemplarische Darstellung eines Diagramms, welches in Abhängigkeit der Bedieneingaben des Inhalte-Produzenten auf der Anzeigeeinrichtung 12 des zweiten Client 6 angezeigt wird.

Das Diagramm 14 umfasst eine Vielzahl von Verhaltensobjekten 15 bis 28, die durch einen Programmfluss beschreibende Verbindungsobjekte (durchgängige Linien) und durch einen Datenfluss beschreibende Verbindungsobjekte (gestrichelten Linien) verknüpft sind. Die jeweiligen Verhaltensobjekte 15 bis 28 wählt der Inhalte-Produzent durch eine Bedieneingabe in die Eingabeeinrichtung 13 aus, welche das Content-Management-System entgegennimmt. Durch die einzelnen Bedieneingaben entsteht sukzessive das Diagramm 14, welches auf der grafischen Benutzeroberfläche mittels der Anzeigeeinrichtung 12 dargestellt wird.

Das Verhaltensobjekt 15 beschreibt ein clientseitiges Triggerereignis, nämlich eine Bedieneingabe des Nutzers des ersten Clients 5 in Form einer Berührung der Eingabeeinrichtung 9. Die Berührung bezieht sich dabei auf das auf der Anzeigeeinrichtung 8 darzustellende AR-Objekt, das rein exemplarisch eine Kugel (sphere) zeigt.

Dem Programmfluss von einem Ausgang des Verhaltensobjekts 15 folgend wird das Verhaltensobjekt 28, welches ein Modulverhaltensobjekt ist, erreicht. Das Modulverhaltensobjekt 28 wurde im Rahmen des Verfahrens zuvor in einem anderen Dialog durch Bedieneingaben des Inhalte-Produzenten definiert, indem mehrere Verhaltensobjekte und diese verknüpfende Verbindungsobjekte in einem anderen Diagramm zum Modulverhaltensobjekt zusammengefasst wurden. Das Modulverhaltensobjekt kann somit zur Verwendung als Verhaltensobjekt 28 im Diagramm 14 ausgewählt und dargestellt werden.

Das Verhaltensobjekt 28 weist drei Eingänge auf, die mit Ausgängen der Verhaltensobjekte 21, 22, 23 verbunden sind. Die Verhaltensobjekte 21, 22, 23 beschreiben jeweils eine Variable, deren Typ und Wert der Inhalte-Produzent durch entsprechende Bedieneingaben in das Content-Management-System vorgibt und dort gespeichert werden. Dazu weisen die Verhaltensobjekte 21, 22, 23 jeweils ein Eingabefeld 30 auf. Die durch die Verhaltensobjekt 21, 22, 23 vorgegebenen Werte der Variablen stellen insofern deren Ausgangswerte und durch die Verknüpfung mittels Verbindungsobjekten Eingangsparameter des Verhaltensobjekts 28 dar.

Das Verhaltensobjekt 28 ist derart definiert, dass der Programmfluss entweder entlang eines ersten Wegs 31 oder entlang eines zweiten Wegs 32 in Abhängigkeit des durch das Verhaltensobjekt 15 beschriebenen Triggerereignisses und der durch die Verhaltensobjekte 21, 22, 23 beschriebenen Variablen fortgesetzt wird.

Entlang des ersten Wegs 31 wird zunächst ein eine Aktion beschreibendes Verhaltensobjekt 16 erreicht, welches eine Warteaktion ist. Das Content-Management-System nimmt durch Bedieneingaben des Inhalte-Produzenten in Eingabefelder 30 des Verhaltensobjekts 16 einen Wert und eine Einheit einer Wartedauer entgegen. Nach Ablauf der durch das Verhaltensobjekt 16 definierten Wartezeit, wird der Programmfluss des ersten Wegs 31 mit dem Verhaltensobjekt 17 fortgesetzt.

Das Diagramm 14 umfasst ferner das eine Variable beschreibenden Verhaltensobjekt 20. Der Typ der Variablen ist ein AR-Objekt. Der Variablen ist ein weiteres zuvor definiertes AR-Objekt zugewiesen, welches rein exemplarisch eine Rakete (rocket) zeigt. Ein Ausgang des Verhaltensobjekts 20 ist mit einem Eingang des Verhaltensobjekts 24 verbunden, dem wiederum die Verhaltensobjekte 25, 26, 27 nachgeschaltet sind. Die Verhaltensobjekte 24 bis 27 beschreiben jeweils eine Funktion, welche an ihren Eingängen anliegenden Eingangsparametern einen Ausgangswert an ihrem Ausgang zuordnet.

Das Verhaltensobjekt 24 gibt vorliegend als Ausgangswert einen Rotationsvektor des weiteren AR-Objekts aus. Das Verhaltensobjekt 25 konvertiert diesen Rotationsvektor in seine Einträge beschreibende Zahlenwerte. Das Verhaltensobjekt 26 konvertiert die Zahlenwerte wiederum zurück in einen Vektor, wobei nach dem in Fig. 2 dargestellten Datenfluss ein x-Koordinateneintrag, und ein y-Koordinateneintrag des vom Verhaltensobjekt 24 ausgegebenen Vektors beibehalten und ein z-Koordinatenwert als Zahl vom Verhaltensobjekt 28 bereitgestellt wird.

Ein Ausgang des Verhaltensobjekts 26 ist einerseits mit einem Eingang des eine Aktion beschreibenden Verhaltensobjekts 17 verknüpft, dessen weitere Eingänge mit dem Ausgang des Verhaltensobjekts 20 und mit dem Ausgang des Verhaltensobjekts 16 verknüpft sind. Das Verhaltensobjekt 17 führt eine Rotation des weiteren AR-Objekts um den vom Verhaltensobjekt 26 bereitgestellten Vektor durch, sobald die für das Verhaltensobjekt 16 definierte Wartedauer abgelaufen ist. Der Programmfluss wird dann mit dem Verhaltensobjekt 18 fortgesetzt, welches als Aktion das Darstellen eines Hinweises auf der Anzeigeeinrichtung 8 des ersten Clients 5 beschreibt. Der Inhalt des Hinweises ist durch einen Textstring bestimmt, der an einem Eingang des Verhaltensobjekts 18 erhalten wird. Der Textstring wird an einem mit dem Eingang verknüpften Ausgang des Verhaltensobjekts 27 bereitgestellt, das die Einträge des vom Verhaltensobjekt 26 bereitgestellten Vektors in den Textstring wandelt.

Ersichtlich ist es möglich, das Diagramm so zu gestalten, dass sich Verbindungsobjekte kreuzen oder einzelne Verbindungsobjekte hinter Verhaltensobjekten hergeführt werden, wie zum Beispiel das das Verhaltensobjekt 20 mit dem Verhaltensobjekt 17 verknüpfende Verbindungsobjekt, welches hinter dem Verhaltensobjekt 16 hergeführt wird.

Entlang des zweiten Wegs 32 ist hingegen das eine Aktion beschreibendes Verhaltensobjekt 19 vorgesehen, welches das Öffnen einer Dialogbox auf dem ersten Client 5 bewirkt.

Der Programm- und Datenfluss gemäß dem Diagramm 14 ist hierbei als rein exemplarische Darstellung etlicher möglicher Bedieneingaben des Inhalte-Produzenten zu verstehen. Daneben sind sowohl weitere Aktionen, Funktionen und Variablen als auch weitere Verhaltensobjekte auswählbar und durch Bedieneingaben dem Diagramm 14 hinzufügbar. Eine weitere Gruppe von Verhaltensobjekten sind beispielsweise Verhaltensobjekte, die einen Systemwert des ersten Clients 5 zu dessen Laufzeit beschreiben. Diese Systemwerte können einen Ausgabewert bereitstellen, der ein Sensorwert der Sensoreinrichtung 11 beschreibt.

Nach Fertigstellung des Diagramms 14 wird eine Bedieneingabe des Inhalte-Produzenten entgegengenommen, die eine Umsetzung des Diagramms in einen Datensatz, beispielsweise im JSON-Format, bewirkt. Dieser Datensatz bildet die Verhaltensdaten, die zusammen mit den Grafikdaten, den Zusatzdaten und den Markerdaten die AR-Daten bilden. Der Datensatz bzw. die Verhaltensdaten sind dazu geeignet, einen Programmcode auf dem ersten Client 5 so zu parametrieren, dass das durch das Diagramm 14 beschriebene Verhalten auf dem ersten Client 5 durchgeführt wird.

Schließlich werden die AR-Daten auf dem Server 2 zum Abruf durch den ersten Client 5 bereitgestellt.

Als ein Anwendungsbeispiel des zuvor beschriebenen Verfahrens ist vorgesehen, dass die Grafikdaten eine Visualisierung eines Bauelements einer Industriemaschine als AR-Objekt beschreiben. Die AR-Daten umfassen dann Markerdaten, die das Bauelement als Marker definieren. Wird mithin das Bauelement durch die Bilderfassungseinrichtung 10 des ersten Clients 5 erfasst, wird auf der Anzeigeeinrichtung 8 eine durch die Grafikdaten beschriebene dreidimensionale Visualisierung des Bauelements als AR-Objekt dargestellt.

So ist es möglich, die AR-Daten mittels des Content-Management-Systems so zu gestalten, dass sich der Nutzer des ersten Clients 5 sich in einen Wartungsbereich der Industriemaschine begibt, dort das als Marker definierte Bauelement mittels des ersten Clients 5 erfasst und die dreidimensionale Visualisierung des Bauelements dargestellt wird. Durch eine entsprechende Definition der Verhaltensdaten kann der Nutzer dann für eine Wartung oder Reparatur des Bauelements nützliche Informationen in Form einer durch die Zusatzdaten beschriebenen Dokumentation der Bauelements oder einer Wartungs- bzw. Reparaturanleitung erhalten.

## Patentansprüche

1. Verfahren zum Bereitstellen von AR-Daten, wobei die AR-Daten Verhaltensdaten, die ein Verhalten eines auf einem Client (5) darzustellenden AR-Objekts beschreiben, umfassen, wobei das Verfahren folgende durch ein Content-Management-System durchgeführte Schritte aufweist:
- Bereitstellen einer grafischen Benutzeroberfläche für einen Inhalte-Produzenten, die Verhaltensobjekte (15-28) zur Auswahl durch den Inhalte-Produzenten bereitstellt, wobei ein Verhaltensobjekt (16-19) eine Aktion des AR-Objekts beschreibt und einen Eingang aufweist und ein Verhaltensobjekt (15) ein clientseitiges Triggerereignis beschreibt und einen Ausgang aufweist,
- Entgegennehmen von Bedieneingaben des Inhalte-Produzenten, welche die Auswahl von Verhaltensobjekten (15-28) und eine einen Programmfluss beschreibende Verknüpfung von Verhaltensobjekten (15-28) durch ein Verbindungsobjekt umfassen,
- Darstellen der Verhaltensobjekte (15-28) und der Verbindungsobjekte als Diagramm (14) auf der grafischen Benutzeroberfläche,
- Umsetzen des Diagramms (14) in einen die Verhaltensdaten bildenden Datensatz, durch welchen ein Programmcode auf dem Client (5) zur Durchführung des Verhaltens parametrierbar ist, und
- Bereitstellen der AR-Daten für den Client (5).

2. Verfahren nach Anspruch 1, wobei das Triggerereignis eine Bedienaktion eines Nutzers des Clients (5) beschreibt.

3. Verfahren nach Anspruch 1 oder 2, wobei die Bedieneingaben eine einen Datenfluss beschreibende Verknüpfung zwischen einem Ausgang eines der Verhaltensobjekte (15-28) und einem Eingang eines anderen der Verhal tensobjekte (15-28) beschreibt, wobei die Verhaltensobjekte (15-28) derart verknüpft werden, dass ein am Ausgang bereitgestellter Ausgangswert des Verhaltensobjekts (15-28) dem Eingang des anderen Verhaltensobjekts (15-28) als Eingangsparameter zugeführt wird.

4. Verfahren nach Anspruch 3, wobei ein Verhaltensobjekt (24-27) eine Funktion beschreibt, welche einen oder mehrere Eingangsparameter des Verhaltensobjekts (24-27) verarbeitet und als Ausgangswert bereitstellt.

5. Verfahren nach Anspruch 3 oder 4, wobei ein Verhaltensobjekt (20-23) eine Variable beschreibt, wobei ein durch eine Bedieneingabe des Inhalte-Produzenten vorgegebener Wert als Ausgangswert des Verhaltensobjekts (20-23) gespeichert wird.

6. Verfahren nach einem der Ansprüche 3 bis 5, wobei ein Verhaltensobjekt einen Systemwert des Clients (5) zu dessen Laufzeit als Ausgabewert beschreibt und als Ausgangswert des Verhaltensobjekts bereitstellt wird.

7. Verfahren nach einem der vorhergehenden Ansprüche, wobei eine Bedieneingabe des Inhalte-Produzenten entgegengenommen wird, welche das Definieren mehrerer Verhaltensobjekte und diese verknüpfende Verbindungsobjekte in einem zweiten Diagramm zu einem Modulverhaltensobjekt beschreibt, wobei das Modulverhaltensobjekt als ein Verhaltensobjekt (28) im ersten Diagramm (14) verwendet wird.

8. Verfahren nach einem der vorhergehenden Ansprüche, wobei
- das Diagramm (14) als Knotendiagramm abgebildet wird und/oder
- die Verhaltensobjekte (15-28) kastenartig abgebildet werden und/oder
- das Verbindungsobjekt linienartig abgebildet wird.

9. Verfahren nach einem der vorhergehenden Ansprüche, wobei die AR-Daten Zusatzdaten, insbesondere Bildinformationen und/oder Videoinformationen und/oder Audioinformationen und/oder Textinformationen, für das AR-Objekt umfassen, wobei die Aktion das Darstellen der Zusatzdaten auf dem Client beschreibt und/oder die Zusatzdaten durch das Content-Management-System entgegengenommen und mit den Verhaltensdaten verknüpft werden.

10. Verfahren nach einem der vorhergehenden Ansprüche, wobei die AR-Daten ferner Grafikdaten umfassen, die das AR-Objekt beschreiben, wobei die Grafikdaten in Abhängigkeit einer Bedieneingabe des Inhalte-Produzenten durch das Content-Management-System entgegengenommen und mit den Verhaltensdaten verknüpft werden.

11. Verfahren nach Anspruch 10, wobei die Grafikdaten eine Visualisierung eines Bauelements einer Industriemaschine als AR-Objekt beschreiben, wobei die AR-Daten Markerdaten umfassen, welche das Bauelement als Marker definieren, bei dessen Erfassung durch den Client (5) das AR-Objekt dargestellt wird.

12. Verfahren nach einem der vorhergehenden Ansprüche, wobei der Client (5) ein tragbares Datenkommunikationsgerät, insbesondere ein Smartphone oder ein Tablet-PC, ist.

13. Recheneinrichtung (3), umfassend Mittel zur Ausführung der Schritte eines Verfahrens nach einem der Ansprüche 1 bis 12.

14. System (1), umfassend eine Recheneinrichtung (3) nach Anspruch 13 und den Client (5).

15. Computerprogramm (4), umfassend Befehle, die bei der Ausführung des Programms durch einen Computer diesen veranlassen, die Schritte des Verfahrens nach einem der Ansprüche 1 bis 12 auszuführen.
